# FASCICULE DE BREVET EUROPEEN

(11) **EP 3 931 427 B1**
(45) Date de publication et mention de la délivrance du brevet: **22.02.2023**
(21) Numéro de dépôt: 20721672.2
(22) Date de dépôt: 26.02.2020
(51) Int. Cl.: F01D 11/12, F01D 25/24

(54) **ENSEMBLE POUR UNE TURBINE DE TURBOMACHINE**
ANORDNUNG FÜR EINE TURBINE EINER TURBOMASCHINE
ASSEMBLY FOR A TURBINE OF A TURBOMACHINE

(30) Priorité: 01.03.2019 FR 1902156
(43) Date de publication de la demande: 05.01.2022
(73) Titulaire: Safran Ceramics, 33185 Le Haillan (FR)
(72) Inventeur: AUPETIT, Christophe, 77550 MOISSY-CRAMAYEL (FR); TESSON, Thierry, 77550 MOISSY-CRAMAYEL (FR); ROUSSILLE, Clément, 77550 MOISSY-CRAMAYEL (FR); CHEVALIER, Cécile, 77550 MOISSY-CRAMAYEL (FR)
(74) Mandataire: Ernest Gutmann - Yves Plasseraud S.A.S.
(86) Numéro de dépôt international: PCT/FR2020/000045
(87) Numéro de publication internationale: WO 2020/178490

(56) Documents cités:
- EP-A1- 3 390 783
- FR-A1- 3 033 825
- FR-A1- 3 068 072
- US-A1- 2008 178 465

## Description

### Domaine technique de l'invention

La présente invention concerne un ensemble pour une turbine de turbomachine, en particulier une turbine haute pression.

### Etat de la technique antérieure

Le domaine d'application de l'invention est notamment celui des turboréacteurs ou des turbopropulseurs d'avion. L'invention est toutefois applicable à d'autres turbomachines, par exemple des turbines industrielles.

L'invention concerne en particulier un ensemble comportant un carter s'étendant circonférentiellement autour d'un axe et des secteurs destinés à former un anneau apte à délimiter une veine d'écoulement de gaz de façon à canaliser le flux des gaz de combustion. Les secteurs peuvent notamment comporter un matériau abradable en partie radialement interne et être réalisés en matériau composite à matrice céramique, ou CMC.

Dans la suite de la description, les termes « axial », « radial » et « circonférentiel » sont définis par rapport à l'axe du carter.

Les matériaux composites à matrice céramique, ou CMC, sont connus pour leurs bonnes propriétés mécaniques qui les rendent aptes à constituer des éléments de structure, et pour leur capacité à conserver ces propriétés à des températures élevées. Dans des turbomachines d'avion en particulier, l'amélioration du rendement et la réduction des émissions polluantes conduisent à rechercher un fonctionnement à des températures toujours plus élevées. Aussi, l'utilisation de CMC pour différentes parties chaudes de tels moteurs a déjà été envisagée, d'autant que les CMC ont une masse volumique inférieure à celle de métaux réfractaires traditionnellement utilisés.

Chaque secteur comporte classiquement une paroi radialement interne cylindrique, destinée à délimiter une partie de la veine d'écoulement des gaz, et deux flancs écartés axialement l'un de l'autre et s'étendant radialement vers l'extérieur depuis la paroi cylindrique interne. La paroi interne peut comporter un revêtement en matériau abradable, comme cela est connu en soi. L'un des flancs du carter comporte classiquement deux trous oblongs s'étendant chacun circonférentiellement et écartés circonférentiellement l'un par rapport à l'autre. L'autre flanc du carter comporte classiquement un trou oblong s'étendant circonférentiellement et un trou oblong s'étendant radialement, les deux trous étant écartés circonférentiellement l'un de l'autre.

Chaque flanc du secteur peut être monté sur un flasque radial solidaire du carter, par l'intermédiaire de plots engagés dans des logements des flasques du carter et dans les trous oblongs du secteur correspondant. Un tel montage est isostatique, de fait de la présence de trous oblongs et de l'orientation de ces trous. Cependant, les plots étant cylindriques, les zones de contact entre les plots et le bord des trous oblongs du secteur sont formées par des lignes. De tels contacts linéiques entre les plots et le secteur génèrent des pressions de Hertz importantes, faisant apparaître des phénomènes d'usure prématurée du secteur par matage ou « fretting » en fonctionnement. EP 3 390 783, FR 3 033 825, US 2008/178456 et FR 3 068 072 divulguent des exemples de secteur d'anneau de turbine.

Le document EP 2 784 269 divulgue un secteur d'anneau de turbine comportant des plots de section elliptique et de plots de section rectangulaires, engagés dans des orifices du carter. Du fait du jeu entre les orifices et les plots, et du fait des tolérances de positionnement et de fabrication, les zones de contact entre les plots du secteur et les orifices du carter restent limitées. Par ailleurs, de telles tolérances empêchent également un positionnement radial précis du secteur par rapport au carter.

L'invention vise à remédier à ces inconvénients, de façon simple, peu onéreuse et fiable.

### Résumé de l'invention

A cet effet, la présente invention concerne un ensemble pour une turbine de turbomachine selon la revendication 1, comportant un carter s'étendant circonférentiellement autour d'un axe X, des secteurs destinés à former un anneau apte à délimiter une veine d'écoulement de gaz, chaque secteur comportant un premier flanc et un second flanc s'étendant radialement et circonférentiellement autour dudit axe et écartés axialement l'un de l'autre, chaque flanc du secteur comportant au moins une surface d'appui radial apte à coopérer avec des moyens d'appui radial du carter, l'un au moins des flancs comportant des moyens de positionnement circonférentiel du secteur par rapport au carter, chaque surface d'appui radial étant cylindrique d'axe X et apte à venir en appui sur une surface cylindrique d'axe X complémentaire, solidaire du carter.

L'utilisation de surfaces de contact cylindriques de grand diamètre permet de maximiser lesdites surfaces de contact et de réduire ainsi les pressions de Hertz de façon à éviter les phénomènes précités d'usure prématurée par matage ou « fretting ». Le terme cylindrique peut être utilisé pour définir une surface de portion de cylindre. Le terme cylindre définit ici une surface de révolution à section circulaire.

Les surfaces cylindriques de contact solidaires du carter peuvent venir de matière avec le carter ou être formées par un ou plusieurs éléments distincts du carter et solidaires du carter.

Les surfaces d'appui radial de chaque flanc permettent de positionner radialement le secteur par rapport au carter, le secteur étant en outre positionné circonférentiellement par les moyens correspondants, lesdites surfaces d'appui et les moyens de positionnement circonférentiel étant aptes à assurer un montage isostatique.

Le premier flanc comporte des premier et deuxième trous oblongs s'étendant circonférentiellement et écartés circonférentiellement l'un de l'autre, le second flanc comportant un troisième trou oblong s'étendant circonférentiellement et un quatrième trou oblong s'étendant radialement, les troisième et quatrième trous oblongs étant écartés circonférentiellement l'un de l'autre, des premier, deuxième, troisième et quatrième plots d'appui solidaires du carter étant engagés respectivement dans les premier, deuxième, troisième et quatrième trous oblongs du secteur, les premier, deuxième, et troisième plots étant aptes à venir en appui radialement sur les bords des premier, deuxième et troisième trous, au niveau de surfaces cylindriques d'axe X.

En dehors de la portée de l'invention definié par le rvendications il est possible d'inverser la position des plots et des trous. En d'autres termes, les trous peuvent être formés sur le carter, les plots pouvant être formés sur les flancs du secteur.

L'ensemble peut comporter des moyens de maintien aptes à venir maintenir les surfaces d'appui complémentaires des premier, deuxième et troisième plots du carter en appui respectivement sur les surfaces d'appui cylindriques des premier, deuxième et troisième trous oblongs du secteur.

Une telle caractéristique permet d'autoriser la réalisation et le montage de l'ensemble avec des tolérances peu restrictives. En effet, les moyens de maintien permettent de plaquer les surfaces cylindriques d'appui des plots et des trous oblongs correspondants, en contact les unes sur les autres, en cas de jeu radial entre les plots et lesdits trous, et éviter alors tout phénomène d'usure.

Les premier et deuxième plots peuvent venir de matière avec un premier organe d'appui monté sur le carter, le troisième plot venant de matière avec un deuxième organe d'appui monté sur le carter.

Le quatrième plot peut venir de matière avec le deuxième organe d'appui.

Les premier et second organes d'appui peuvent être de formes identiques. On réduit ainsi le nombre de pièces distinctes à réaliser et on facilite le montage d'un tel ensemble.

Le quatrième plot peut être distinct du deuxième organe d'appui.

Le quatrième plot est par exemple solidaire d'un flasque fixé sur le carter.

Les premier et second organes d'appui peuvent être montés respectivement dans des évidements d'un premier flasque et d'un second flasque solidaires du carter.

Chaque organe d'appui peut présenter une partie en forme d'arc de cercle d'axe X, à partir de laquelle s'étendent le ou les plots correspondants, ladite partie en forme d'arc de cercle étant montée dans un évidement en forme de gorge d'axe X du flasque correspondant.

L'un des flasques peut venir de matière avec le carter, l'autre flasque étant distinct du carter et monté fixement sur le carter.

Le montage du flasque sur le carter est par exemple réalisé par l'intermédiaire de vis.

L'ensemble peut comporter des moyens de positionnement circonférentiel de chaque organe d'appui par rapport au carter.

Lesdits moyens de positionnement circonférentiel sont par exemple formés par des plots de positionnement montés dans des trous des organes d'appui et dans des flasques solidaires du carter.

L'invention sera mieux comprise et d'autres détails, caractéristiques et avantages de l'invention apparaîtront à la lecture de la description suivante faite à titre d'exemple non limitatif en référence aux dessins annexés.

### Brève description des figures

[Fig. 1] et
[Fig. 2] sont des vues en perspective d'une partie de l'ensemble selon une première forme de réalisation de l'invention ;
[Fig. 3] est une vue en coupe selon un plan radial, illustrant le montage des premier et deuxième plots dans le flanc correspondant d'un secteur ;
[Fig. 4] est une vue en coupe selon un plan radial, illustrant le montage des troisième et quatrième plots dans le flanc correspondant du secteur,
[Fig. 5] et
[Fig. 6] sont des demi-vues en coupe selon un plan axial, respectivement avant et après montage du flasque amovible sur le carter;
[Fig. 7] et
[Fig. 8] sont des vues correspondant respectivement aux figures 1 et 2, illustrant une deuxième forme de réalisation de l'invention.

### Description détaillée de l'invention

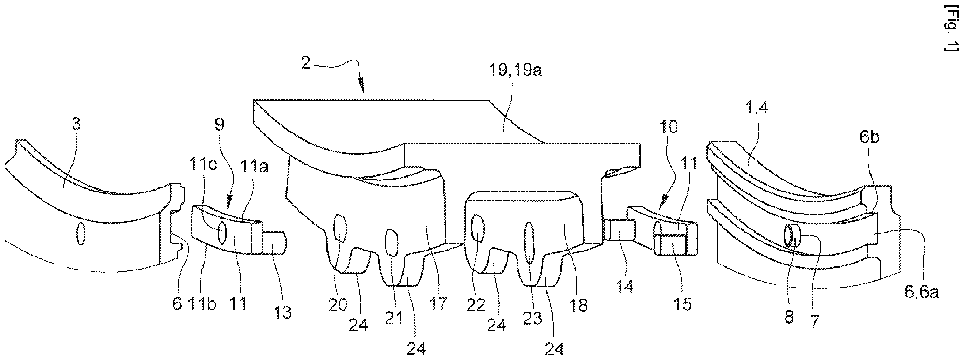

Les figures 1 à 6 représentent un ensemble pour une turbine de turbomachine, comportant un carter 1 s'étendant circonférentiellement autour d'un axe que l'on notera X (non représenté), et des secteurs 2 contigus destinés à former un anneau apte à délimiter une veine d'écoulement de gaz. Un seul secteur 2 est illustré sur les figures, seule une partie du carter 1 étant par ailleurs représentée.

Le carter 1 comporte un premier flasque 3 et un second flasque 4 s'étendant radialement vers l'intérieur depuis une partie annulaire 5. Le premier flasque 3 est ici réalisé par une pièce distincte, fixée au carter 1, par exemple par vissage.

Chaque flasque 3, 4 comporte des gorges annulaires 6 d'axe X, débouchant axialement en regard du flasque opposé 4, 3. Chaque gorge 6 est délimitée par une surface annulaire de fond 6a plane et radiale, et deux surfaces latérales cylindriques 6b s'étendant axialement. Des trous 7 sont ménagés dans les surfaces de fond 6a des gorges 6, un plot cylindrique de positionnement circonférentiel 8 étant engagé dans chaque trou 7. Les plots 8 de chaque flasque 3, 4 peuvent présenter des dimensions différentes, bien qu'ils portent la même référence 8.

Des premiers organes d'appui 9 et des seconds organes d'appui 10 sont montés respectivement sur le premier flasque 3 et sur le second flasque 4.

En particulier, chaque organe d'appui 9, 10 comporte une partie en forme d'arc de cercle 11, à partir de laquelle deux plots 12, 13, 14, 15 s'étendent axialement, les deux plots 12, 13 ou 14, 15 étant écartés circonférentiellement l'un de l'autre. Les plots 12 à 15 sont situés aux extrémités circonférentielle de la partie 11 en forme d'arc de cercle. Le premier organe d'appui 9 comporte ainsi des premier et deuxième plots 12, 13. Le second organe d'appui 10 comporte ainsi des troisième et quatrième plots 14, 15.

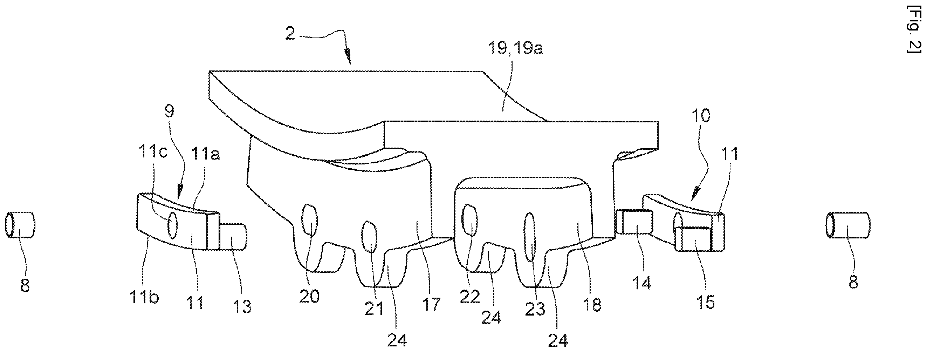

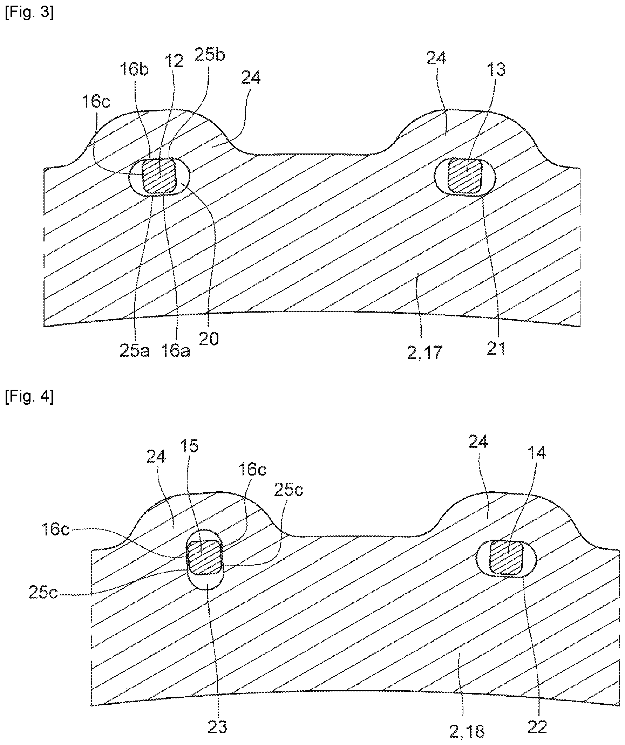

Chaque plot 12 à 15 comporte une surface cylindrique 16b (ou en forme de portion de cylindre) radialement externe d'axe X, une surface cylindrique ou plane radialement interne 16a d'axe X et deux surfaces latérales 16c s'étendant radialement (figure 3). La partie 11 en forme d'arc de cercle du premier organe d'appui est montée dans la gorge 6 du premier flasque 3. La partie 11 en forme d'arc de cercle du second organe d'appui est montée dans la gorge 6 du second flasque 4. La partie 11 en forme d'arc de cercle de chaque organe d'appui 9, 10 comporte un trou 11c (figures 1 et 2) dans lequel est engagé le plot 8 correspondant. La dimension radiale de chaque partie 11 en forme d'arc de cercle correspond à la dimension radiale de la gorge 6 correspondante. Les bords radialement interne et externe 11a, 11b de chaque partie 11 sont ainsi aptes à venir en appui sur les surfaces latérales correspondantes 6b des gorges 6, de manière à reprendre efficacement les efforts radiaux en fonctionnement. Les plots 8 sont aptes à reprendre les efforts circonférentiels, ces efforts étant néanmoins relativement faibles.

Chaque secteur 2 d'anneau comporte une paroi cylindrique 19 (ou en portion de cylindre) à partir de laquelle deux flancs 17, 18 s'étendent radialement vers l'extérieur, respectivement un premier flanc 17 situé du côté du premier flasque 3, et un second flanc 18 situé du côté du second flasque 4. La surface radialement interne 19a de la paroi cylindrique 19 peut comporter un revêtement en matériau abradable, comme cela est connu en soi. Ladite surface radialement interne 19a est destinée à délimiter une partie de la veine d'écoulement des gaz au sein de la turbine haute-pression de la turbomachine. Chaque flanc 17, 18 s'étend circonférentiellement sur toute la circonférence du secteur 2.

Le premier flanc 17 comporte des premier et deuxième trous oblongs 20, 21 s'étendant circonférentiellement et écartés circonférentiellement l'un de l'autre. Le second flanc 18 comporte un troisième trou oblong 22 s'étendant circonférentiellement et un quatrième trou oblong 23 s'étendant radialement, les troisième et quatrième trous oblongs 22, 23 étant écartés circonférentiellement l'un de l'autre.

Les extrémités radialement internes des flancs 17, 18 comportent des excroissances de matière 24, de formes arrondies, en regard des trous oblongs 20 à 23.

Les bords radialement interne et externe 25a, 25b (figure 3) des premier, deuxième et troisième trous 20, 21, 22 sont formés par des surfaces cylindriques (ou en portion de cylindre) d'axe X.

Les bords latéraux 25c du quatrième trou 23 sont orientés radialement (figure 4). Les premier, deuxième, troisième plots 12, 13, 14 peuvent être engagés sans jeu radial ou avec un jeu radial minimal entre les bords radialement interne et externe 25a, 25b des premier, deuxième et troisième trous 20, 21, 22, respectivement.

Le quatrième plot 15 peut être engagé sans jeu circonférentiel, ou avec un jeu circonférentiel minimal, entre les bords latéraux 25c du quatrième trou 23.

Un jeu radial plus important peut être prévu entre les premier, deuxième et troisième plots 12, 13, 14, d'une part, et les premier, deuxième et troisième trous 20, 21, 22, d'autre part, de manière à autoriser des tolérances dimensionnelles et de montage moins restrictives. Dans un tel cas, il peut être prévu des moyens de maintien aptes à venir maintenir les surfaces d'appui complémentaires des premier, deuxième et troisième plots 12, 13, 14 du carter 1 en appui respectivement sur les surfaces d'appui cylindriques 25a, 25b des premier, deuxième et troisième trous 20, 21, 22 oblongs du secteur 2.

Les premier, deuxième et troisième plots 12, 13, 14 peuvent venir en appui sur les bords radialement internes 25a ou préférentiellement sur les bords radialement externes 25b des premier, deuxième et troisième trous oblongs 20, 21, 22, ici sur les bords radialement externes 25b.

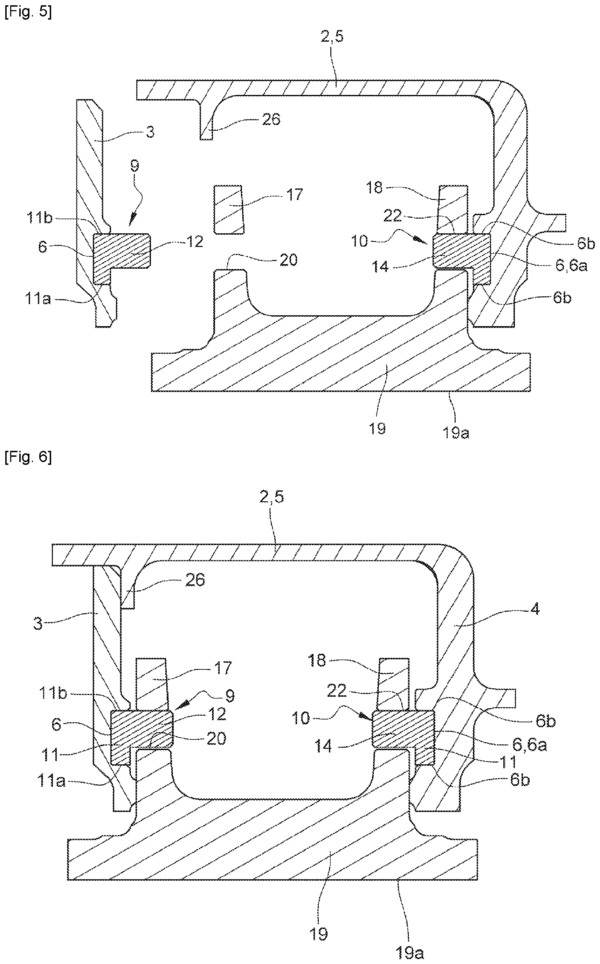

Lors du montage des secteurs 2 dans le carter 1, chaque second organe d'appui 10 est monté dans la gorge 6 du second flasque 4, et les troisième et quatrième plots 14, 15 de chaque second organe d'appui 10 sont engagés dans les troisième et quatrième trous 22, 23 de chaque secteur 2, comme illustré à la figure 5. Les premiers organes d'appui 9 sont montés dans la gorge 6 du premier flasque 3, ce dernier étant annulaire et formé d'une seule pièce, ou sectorisé.

Le premier flasque 3 est ensuite monté sur un rebord d'appui annulaire 26 du carter 1 et fixé audit carter 1, par exemple par vissage, comme illustré à la figure 6. Le rebord annulaire 26 s'étend radialement vers l'intérieur depuis la partie annulaire 5 du carter 1. Lors de la mise en place du premier flasque 3, les premier et deuxième plots 12, 13 du premier organe d'appui 9 sont engagés dans les premier et deuxième trous 20, 21 du secteur 2 correspondant. Les moyens de maintien radial (non représentés) permettent ensuite de maintenir les plots 12 à 14 en appui sur les bords radialement externes 25b des trous 20 à 22 du secteur 2.

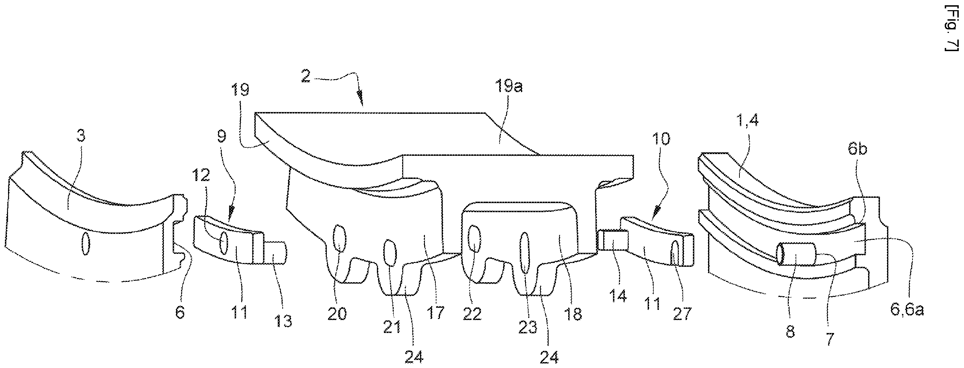

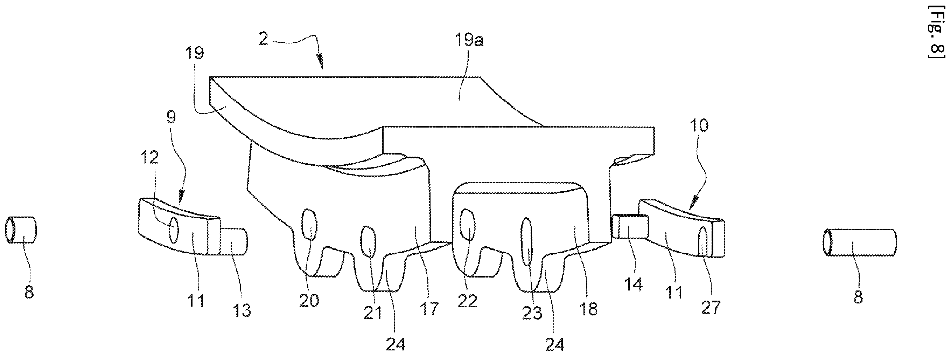

Les figures 7 et 8 illustrent une deuxième forme de réalisation, qui diffère de celle exposée précédemment en référence aux figures 1 à 6 en ce que le deuxième organe d'appui 10 est dépourvu de quatrième plot 15. Le maintien en position circonférentielle du secteur 2 est assuré par le plot 8, de forme cylindrique, monté dans un trou de forme complémentaire 7 du deuxième flasque 4 et dans le quatrième trou 23 du secteur 2, au travers d'une ouverture, d'une encoche 27 ou d'un trou du deuxième organe d'appui 11 par exemple. Le plot 8 peut être formé intégralement avec le deuxième flasque 4.

Par ailleurs, comme précédemment, ledit plot 8 assure le maintien en position circonférentielle du deuxième organe d'appui 10.

Dans les deux formes de réalisation présentées, l'utilisation de surfaces de contact cylindriques 16b, 25b de grand diamètre, c'est-à-dire de diamètre correspondant au diamètre d'implantation des plots 12 à 14 par rapport à l'axe X, permet de maximiser lesdites surfaces de contact 16b, 25b et de réduire les pressions de Hertz de façon à éviter les phénomènes précités d'usure prématurée des secteurs 2 par matage ou « fretting ».

## Revendications

1. Ensemble pour une turbine de turbomachine, comportant un carter (1) s'étendant circonférentiellement autour d'un axe X, des secteurs (2) destinés à former un anneau apte à délimiter une veine d'écoulement de gaz, chaque secteur (2) comportant un premier flanc (17) et un second flanc (18) s'étendant radialement et circonférentiellement autour dudit axe X et écartés axialement l'un de l'autre, chaque flanc (17, 18) du secteur (2) comportant au moins une surface d'appui radial (25b) apte à coopérer avec des moyens d'appui radial (12, 13, 14) du carter (1), l'un au moins des flancs (17, 18) comportant des moyens de positionnement circonférentiel (23) du secteur (2) par rapport au carter (1), **caractérisé en ce que** chaque surface d'appui radial (25b) est cylindrique d'axe X et est apte à venir en appui sur une surface cylindrique d'axe X complémentaire (16b), solidaire du carter (1), et **en ce que** le premier flanc (17) comporte des premier et deuxième trous oblongs (20, 21) s'étendant circonférentiellement et écartés circonférentiellement l'un de l'autre, le second flanc (18) comportant un troisième trou oblong (22) s'étendant circonférentiellement et un quatrième trou oblong (23) s'étendant radialement, les troisième et quatrième trous oblongs (22, 23) étant écartés circonférentiellement l'un de l'autre, des premier, deuxième, troisième et quatrième plots d'appui (12, 13, 14, 15) solidaires du carter (1) étant engagés respectivement dans les premier, deuxième, troisième et quatrième trous oblongs (20, 21, 22, 23) du secteur (2), les premier, deuxième, et troisième plots (12, 13, 14) étant aptes à venir en appui radialement sur les bords des premier, deuxième et troisième trous (20, 21, 22), au niveau de surfaces cylindriques (16b, 25b) d'axe X.

2. Ensemble selon la revendication 1, **caractérisé en ce qu'**il comporte des moyens de maintien aptes à venir maintenir les surfaces d'appui complémentaires (16b, 25b) des premier, deuxième et troisième plots (12, 13, 14) du carter (1) en appui respectivement sur les surfaces d'appui cylindriques (25b) des premier, deuxième et troisième trous oblongs (20, 21, 22) du secteur (2).

3. Ensemble selon la revendication 1 ou 2, **caractérisé en ce que** les premier et deuxième plots (12, 13) viennent de matière avec un premier organe d'appui (9) monté sur le carter (1), le troisième plot (14) venant de matière avec un deuxième organe d'appui (10) monté sur le carter (1).

4. Ensemble selon la revendication 3, **caractérisé en ce que** le quatrième plot (15) vient de matière avec le deuxième organe d'appui (10).

5. Ensemble selon la revendication 3, **caractérisé en ce que** le quatrième plot (15) est distinct du deuxième organe d'appui (10).

6. Ensemble selon l'une des revendications 3 à 5, **caractérisé en ce que** les premier et second organes d'appui (9, 10) sont montés respectivement dans des évidements (6) d'un premier flasque (3) et d'un second flasque (4) solidaires du carter (1).

7. Ensemble selon la revendication 6, **caractérisé en ce que** chaque organe d'appui (9, 10) présente une partie (11) en forme d'arc de cercle d'axe X, à partir de laquelle s'étendent le ou les plots correspondants (12, 13, 14, 15), ladite partie (11) en forme d'arc de cercle étant montée dans un évidement (6) en forme de gorge d'axe X du flasque correspondant (3, 4).

8. Ensemble selon la revendication 6 ou 7, **caractérisé en ce que** l'un (4) des flasques (3, 4) vient de matière avec le carter (1), l'autre flasque (3) étant distinct du carter (1) et monté fixement sur le carter (1).

9. Ensemble selon l'une des revendications 3 à 8, **caractérisé en ce qu'**il comporte des moyens (8) de positionnement circonférentiel de chaque organe d'appui (9, 10) par rapport au carter (1).

## Patentansprüche

1. Anordnung für eine Turbine einer Turbomaschine bzw. eines Turbotriebwerks, enthaltend ein Gehäuse (1), das sich in Umfangsrichtung um eine Achse X erstreckt, Sektoren (2), die dazu bestimmt sind, einen Ring zu bilden, der geeignet ist, einen Gasströmungskanal zu begrenzen, wobei jeder Sektor (2) eine erste Flanke (17) und eine zweite Flanke (18) aufweist, die sich radial und in Umfangsrichtung um die Achse X erstrecken und axial voneinander beabstandet sind, wobei jede Flanke (17, 18) des Sektors (2) zumindest eine radiale Anlagefläche (25b) aufweist, die geeignet ist, mit radialen Anlagemitteln (12, 13, 14) des Gehäuses (1) zusammenzuwirken, wobei zumindest eine der Flanken (17, 18) Mittel (23) zur umfangsmäßigen Positionierung des Sektors (2) in Bezug auf das Gehäuse (1) aufweist,
**dadurch gekennzeichnet, dass** jede radiale Anlagefläche (25b) zylindrisch um die Achse X verläuft und geeignet ist, an eine fest mit dem Gehäuse (1) verbundene, zylindrisch um die Achse X verlaufende komplementäre Fläche (16b) in Anlage zu gelangen, und dass die erste Flanke (17) ein erstes und ein zweites Langloch (20, 21) aufweist, die sich in Umfangsrichtung erstrecken und in Umfangsrichtung voneinander beabstandet sind, wobei die zweite Flanke (18) ein sich in Umfangsrichtung erstreckendes drittes Langloch (22) und ein sich radial erstreckendes viertes Langloch (23) aufweist, wobei das dritte und das vierte Langloch (22, 23) in Umfangsrichtung voneinander beabstandet sind, wobei ein erster, ein zweiter, ein dritter und ein vierter Anlagezapfen (12, 13, 14, 15), die mit dem Gehäuse (1) fest verbunden sind, jeweils in das erste, zweite, dritte bzw. vierte Langloch (20, 21, 22, 23) des Sektors (2) eingreifen, wobei der erste, der zweite und der dritte Zapfen (12, 13, 14) geeignet sind, radial an die Kanten des ersten, zweiten und dritten Lochs (20, 21, 22) im Bereich der um die Achse X zylindrisch verlaufenden Flächen (16b, 25b) in Anlage zu gelangen.

2. Anordnung nach Anspruch 1,
**dadurch gekennzeichnet, dass** sie Haltemittel aufweist, die geeignet sind, die komplementären Anlageflächen (16b, 25b) des ersten, zweiten und dritten Zapfens (12, 13, 14) des Gehäuses (1) jeweils in Anlage an den zylindrischen Anlageflächen (25b) des ersten, zweiten bzw. dritten Langlochs (20, 21, 22) des Sektors (2) zu halten.

3. Anordnung nach Anspruch 1 oder 2,
**dadurch gekennzeichnet, dass** der erste und der zweite Zapfen (12, 13) stoffschlüssig mit einem ersten, am Gehäuse (1) angebrachten Anlageelement (9) ausgebildet sind, wobei der dritte Zapfen (14) stoffschlüssig mit einem zweiten, am Gehäuse (1) angebrachten Anlageelement (10) ausgebildet ist.

4. Anordnung nach Anspruch 3,
**dadurch gekennzeichnet, dass** der vierte Zapfen (15) stoffschlüssig mit dem zweiten Anlageelement (10) ausgebildet ist.

5. Anordnung nach Anspruch 3,
**dadurch gekennzeichnet, dass** der vierte Zapfen (15) separat von dem zweiten Anlageelement (10) vorliegt.

6. Anordnung nach einem der Ansprüche 3 bis 5,
**dadurch gekennzeichnet, dass** das erste und das zweite Anlageelement (9, 10) jeweils in Ausnehmungen (6) eines ersten Flansches (3) bzw. eines zweiten Flansches (4) gelagert sind, die fest mit dem Gehäuse (1) verbunden sind.

7. Anordnung nach Anspruch 6,
**dadurch gekennzeichnet, dass** jedes Anlageelement (9, 10) einen um die Achse X kreisbogenförmig verlaufenden Abschnitt (11) aufweist, von dem aus sich der oder die entsprechenden Zapfen (12, 13, 14, 15) erstrecken, wobei der kreisbogenförmige Abschnitt (11) in einer um die Achse X rillenförmig verlaufende Ausnehmung (6) des entsprechenden Flansches (3, 4) gelagert ist.

8. Anordnung nach Anspruch 6 oder 7,
**dadurch gekennzeichnet, dass** einer (4) der Flansche (3, 4) stoffschlüssig mit dem Gehäuse (1) ausgebildet ist, wobei der andere Flansch (3) separat vom Gehäuse (1) vorliegt und fest an das Gehäuse (1) angebracht ist.

9. Anordnung nach einem der Ansprüche 3 bis 8,
**dadurch gekennzeichnet, dass** sie Mittel (8) zur umfangsmäßigen Positionierung jedes Anlageelements (9, 10) in Bezug auf das Gehäuse (1) aufweist.

## Claims

1. An assembly for a turbomachine turbine, comprising a housing (1) extending circumferentially about an axis X, sectors (2) intended to form a ring capable of delimiting a gas flow path, each sector (2) comprising a first side (17) and a second side (18) extending radially and circumferentially about the said axis X and spaced axially from each other, each side (17, 18) of the sector (2) comprising at least one radial bearing surface (25b) capable of cooperating with radial bearing means (12, 13, 14) of the housing (1), at least one of the sides (17, 18) comprising means (23) for the circumferential positioning of the sector (2) with respect to the housing (1) **characterised in that** each radial bearing surface (25b) is cylindrical of axis X and is capable of bearing on a complementary cylindrical surface of axis X (16b), integral with the housing (1), and **in that** the first side (17) comprises first and second oblong holes (20, 21) extending circumferentially and spaced circumferentially from each other, the second side (18) comprising a third oblong hole (22) extending circumferentially and a fourth oblong hole (23) extending radially, the third and fourth oblong holes (22, 23) being spaced circumferentially from each other, first, second, third and fourth support pins (12, 13, 14, 15) integral with the housing (1) being engaged respectively in the first, second, third and fourth oblong holes (20, 21, 22, 23) of the sector (2), the first, second and third pins (12, 13, 14) being capable of coming to bear radially on the edges of the first, second and third holes (20, 21, 22), at the level of cylindrical surfaces (16b, 25b) of axis X.

2. An assembly according to claim 1, **characterized in that** it comprises holding means capable of holding the complementary bearing surfaces (16b, 25b) of the first, second and third pins (12, 13, 14) of the housing (1) against, respectively, the cylindrical bearing surfaces (25b) of the first, second and third oblong holes (20, 21, 22) of the sector (2).

3. An assembly according to claim 1 or 2, **characterised in that** the first and second pins (12, 13) are integrally formed with a first support member (9) mounted on the housing (1), the third pin (14) being integrally formed with a second support member (10) mounted on the housing (1).

4. An assembly according to claim 3, **characterised in that** the fourth pin (15) is integrally formed with the second support member (10).

5. An assembly according to claim 3, **characterised in that** the fourth pin (15) is separate from the second support member (10).

6. An assembly according to one of claims 3 to 5, **characterised in that** the first and second support members (9, 10) are mounted, respectively, in recesses (6) of a first flange (3) and of a second flange (4) which are integral with the housing (1).

7. An assembly according to claim 6, **characterised in that** each support member (9, 10) has an arc-shaped part (11) of X-axis, from which the corresponding pin(s) (12, 13, 14, 15) extend(s), said arc-shaped part (11) being mounted in a groove-like recess (6) of X-axis of the corresponding flange (3, 4).

8. An assembly according to claim 6 or 7, **characterised in that** one (4) of the flanges (3, 4) is integrally formed with the housing (1), the other flange (3) being separate from the housing (1) and fixedly mounted on the housing (1).

9. An assembly according to one of claims 3 to 8, **characterized in** it comprises means (8) for the circumferential positioning of each support member (9, 10) with respect to the housing (1).
